# FASCICULE DE BREVET EUROPEEN

(11) **EP 3 027 288 B1**
(45) Date de publication et mention de la délivrance du brevet: **19.07.2017**
(21) Numéro de dépôt: 14747350.8
(22) Date de dépôt: 29.07.2014
(51) Int. Cl.: B01D 1/28, B01D 3/10, C02F 1/04

(54) **INSTALLATIONS DE DISTILLATION THERMIQUE A COMPRESSION MECANIQUE DE VAPEUR**
EINRICHTUNGEN ZUR THERMISCHEN DESTILLATION MIT MECHANISCHER DAMPFKOMPRESSION
FACILITIES FOR THERMAL DISTILLATION WITH MECHANICAL VAPOUR COMPRESSION

(30) Priorité: 29.07.2013 WO PCT/EP2013/065933
(43) Date de publication de la demande: 08.06.2016
(73) Titulaire: Industrial Advanced Services FZ-LLC, Ras Al Khaimah (AE)
(72) Inventeur: WINANDY, Francois-Mathieu, London SW19 2RR (GB)
(74) Mandataire: Office Kirkpatrick
(86) Numéro de dépôt international: PCT/EP2014/066278
(87) Numéro de publication internationale: WO 2015/014840

(56) Documents cités:
- US-A- 2 899 366
- US-A- 4 734 167

## Description

### Domaine de l'invention

La présente invention concerne les installations de distillation fonctionnant selon le principe de distillation thermique par compression mécanique de vapeur (MVC, de l'anglais 'Mechanical Vapour Compression'), particulièrement pour le dessalement ou la déminéralisation d'eau à fins de production d'eau potable ou production d'eau déminéralisée.

### État de la technique

L'invention concerne la mise en oeuvre de plusieurs innovations relatives aux procédés et aux installations de distillation d'eau par MVC ayant pour but de diminuer la consommation en énergie électrique et les coûts de fabrication et d'opération des unités ou des usines de dessalement ou déminéralisation d'eau (DWP, de l'anglais 'Desalination Water Plant') basées sur ce procédé. L'ensemble des innovations mises en oeuvre de manière optimale permet de réduire le CAPEX des installations, et surtout de diminuer leur consommation spécifique en énergie électrique à des valeurs atteignant à peine de l'ordre de 2 à 4kWh/m³ de distillat produit.

L'état actuel de l'Art en matière de DWP par MVC limite le déploiement de ce procédé à cause de sa très haute consommation en énergie électrique (8 à 18kWh/m³ de distillat produit) comparé à d'autres procédés de dessalement ou déminéralisation tels les distillations thermiques alimentées en vapeur principalement mises en oeuvre selon les procédés MSF (de l'anglais 'Multi Stage Flash') ou MED ('Multi Effect Distillation') dont la consommation en énergie électrique auxiliaire se situe entre 2 et 8kWh/m³ de distillat, ou encore le procédé par Osmose Inverse qui affiche dans le cas de l'eau de mer d'une salinité égale ou supérieure à 30g/l des consommations globales (incluant le prétraitement et les consommateurs auxiliaires) de 3 à 7kWh/m³ de perméat produit.

Le procédé MVC est néanmoins très stable et procure beaucoup de confort d'utilisation comme, de manière générale, tous les procédés de dessalement ou déminéralisation thermiques. Les diverses innovations visées dans cette invention permettent de le rendre compétitif sur le marché, spécialement vis-à-vis du procédé d'osmose inverse qui comme lui ne nécessite pas d'apport énergétique sous forme de vapeur mais qui par contre met en oeuvre des techniques plus complexes, moins stables et souvent délicates à opérer.

### Généralités de l'Art antérieur

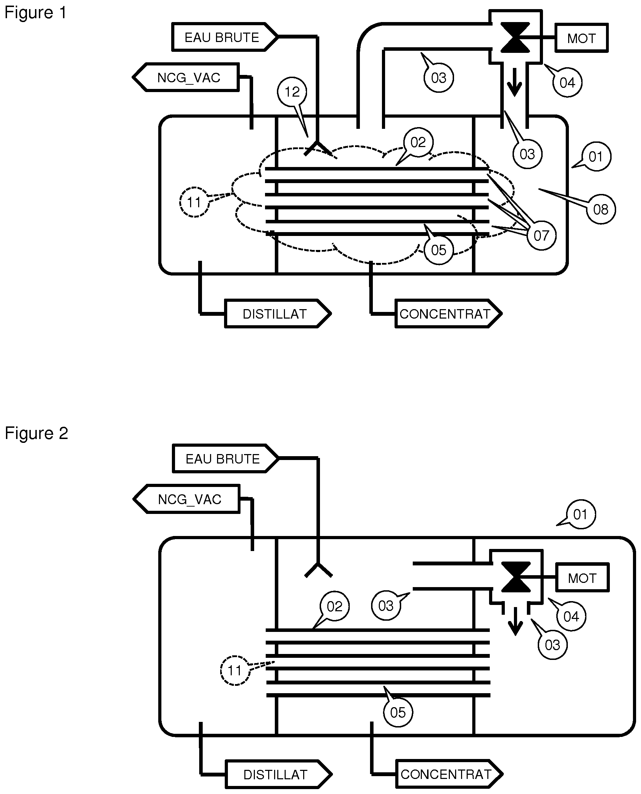

La description des DWP par MVC selon l'état actuel de l'Art peut se résumer comme suit, tant pour les unités à multiples effets (MED-MVC) que pour celles à simple effet. Comme indiqué dans la Figure 1, l'unité est pourvue d'une enveloppe globale (01) généralement sous vide partiel afin de diminuer le point d'ébullition de l'eau à évaporer et condenser. Les DWP par MVC les plus simples mettent en oeuvre un bain d'eau dont la surface assure l'évaporation et un échangeur immergé dans le bain assure la condensation ; les unités modernes comportent un évaporateur-condenseur (EC) (11) de type à tubes ou à plaques, généralement avec application d'un fin film tombant d'eau brute (TFF, de l'anglais 'Thin Falling Film') entretenu au moyen d'arroseurs (12) qui répartissent l'eau à évaporer sur toute la surface de l'EC. L'EC est construit en un matériau de transfert conducteur de chaleur dont une face/une zone assure l'évaporation (02) et l'autre la condensation (05). Dans le cas d'unités à plusieurs effets, la vapeur créée sur la face d'évaporation de l'EC d'un effet est canalisée vers la face de condensation de l'EC de l'effet suivant, jusqu'au dernier effet où la vapeur est alors transportée et re-compressée avant d'être recyclée en tête du premier effet. L'unité est pourvue d'un système de transport (03) et compression (04) de la vapeur, et d'équipements auxiliaires dont un système d'alimentation en eau brute [Eau Brute ou, en anglais Feed Water], un système de mise sous vide partiel et d'élimination des gaz non condensables (NCG, de l'anglais 'Non Condensable Gas') [NGC_VAC], un système d'extraction du distillat [Distillat] et un système d'extraction du concentrat [concentrat ou, en anglais Brine]. De récents développements mettent en oeuvre des systèmes de récupération de chaleur des flux sortants [Distillat]+[Concentrat] en faveur du flux entrant [Eau Brute] afin d'améliorer les performances thermiques globales et offrir des consommations d'énergie électrique atteignant 8 à 12kWh/m³ de distillat.

### Les formes de mises en oeuvre actuelles

Les leaders mondiaux du dessalement par MVC sont SIDEM, DOOSAN, et IDE-Technologies. Ils opèrent tous selon le même procédé. Les DWP par MVC rencontrées fonctionnent sous un vide prononcé, de l'ordre de 0.10 à 0.20bar(a) (dans tout le document, il est fait référence aux pressions absolues), afin de diminuer la température d'évaporation à des valeurs avoisinant les 40 à 50°C. La diminution de la température d'évaporation offre deux avantages : 1 ° une diminution des pertes calorifiques de l'ensemble de l'installation, et 2° profiter de la quasi absence de formation de précipités de carbonates de Calcium en dessous de la température seuil de 60 à 65°C. Les systèmes de transport de vapeur (03) sont internes ou externes à l'enveloppe globale et sont dimensionnés pour des vitesses de vapeur de l'ordre de 100m/s. Les compresseurs sont généralement au nombre de un par unité, généralement de type centrifuge, et opèrent dans le cas des unités de taille moyenne à grande (typiquement jusqu'à environ 5000m³/j) à des vitesses communes aux moteurs électriques industriels à savoir 1500/1800rpm ou 3000/3600rpm (vitesses nominales des moteurs normalisés à respectivement 4 pôles ou 2 pôles, à 50/60Hz).

Le schéma type des installations de dessalement actuelles selon le procédé MVC tel qu'il est mis en oeuvre dans les projets industriels et publics jusqu'à aujourd'hui (comme par exemple dans le document WO8401022) est repris en Figure 1, et comprend :
- une chambre hermétique (01) sous vide partiel pourvue d'un moyen d'entrée d'eau brute [EAU BRUTE ou, en anglais, FEED WATER], d'un moyen de sortie du distillat [DISTILLAT], d'un moyen de sortie de l'eau concentrée [CONCENTRAT ou, en anglais BRINE], et d'un moyen de mise sous dépression et d'extraction des gaz non condensables [NCG_VAC],
- au sein de la chambre hermétique, un évaporateur-condenseur (11) offrant des zones/surfaces d'évaporation (02) et des zones/surfaces de condensation (05),
- un système de transport (03) et compression (04) de la vapeur assurant le cycle de transfert d'énergie d'évaporation et condensation au sein de l'évaporateur-condenseur.

Ces installations actuelles sont caractérisées par le fait que les divers moyens d'entrée d'eau brute, de sortie du distillat et du concentrat, et de mise sous dépression et extraction des gaz non condensables sont externes à la chambre hermétique, à savoir la partie extérieure de leur corps de pompe ainsi que leur moteur sont soumis à la pression atmosphérique. Il en va de même pour le compresseur dont le moteur [MOT] est situé à l'extérieur de la chambre hermétique.

### Problèmes liés aux mises en oeuvre actuelles

Le problème principal lié aux DWP par MVC actuelles est la consommation élevée en énergie électrique. Cette dernière est depuis longtemps attribuée à un faible rendement des compresseurs de vapeur.

Une analyse approfondie des équipements actuels permet également de mettre en évidence l'importance des pertes de charge dans les conduits de transport de vapeur. Les pertes de charge accroissent en effet la température de la vapeur sans augmentation de pression et constituent donc un phénomène de surchauffe de vapeur qui va à l'encontre du processus aval de condensation. Les pertes de charge constituent donc une double pénalité en termes d'énergie de compression : une pour la perte de charge qu'il faut compenser en termes de pression, l'autre pour le phénomène de surchauffe qui rend nécessaire une pression accrue afin de permettre la condensation.

Enfin, la complexité de la mise en oeuvre de tous les équipements auxiliaires installés de manière externe à l'enceinte principale (01) devant opérer sous vide partiel et devant être pourvu d'une isolation thermique efficace rend souvent l'exécution imparfaite et présentant diverses fuites au vide et pertes de chaleur.

### Développements récents

Alors que les mises en oeuvre actuelles n'ont pas évolué dans les marchés industriels et publics, certains développements en laboratoire évoluent selon les pistes suivantes :
- Il est observé une tendance à diminuer les longueurs des circuits de transport de vapeur,
- Certains complexifient le profil des compresseurs afin d'en augmenter l'efficacité,
- D'autres sortent du contexte connu et suggèrent d'opérer la distillation à des pressions plus élevées que la pression atmosphérique (et donc à des températures plus élevées que 100°C) afin de rendre la vapeur plus consistante et augmenter de ce fait l'efficacité de la compression. Même si le rendement de compression se voit augmenté, cette dernière piste semble peu adaptée au dessalement d'eau de mer car d'une part elle engendre la nécessité de mettre en oeuvre un prétraitement complexe afin de gérer le phénomène de précipitation et d'entartrage, et d'autre part elle va à l'encontre de la diminution de pertes calorifiques qui sont liées à la température différentielle entre le procédé et son environnement.

### Résumé de l'invention

L'invention a notamment pour objectif de remédier ces inconvénients de l'art antérieur. Plus précisément, l'invention porte principalement sur l'amélioration substantielle de l'efficacité du compresseur et sur l'élimination quasi totale des pertes de charges du système de transport de vapeur. Dans ce contexte, les installations envisagées par la présente invention sont sujettes à des pertes de charges inférieures à 500 Pa, et de préférence inférieures à 100 Pa.

A cette fin, un premier objet de l'invention fournit une installation de distillation thermique par compression mécanique de vapeur comprenant :
- une chambre hermétique (01) comprenant une entrée pour recevoir de l'eau brute, une sortie pour évacuer le distillat, une sortie pour évacuer le concentrat et une sortie pour évacuer les gaz non condensables ;
- un évaporateur-condenseur (11) comprenant une zone d'évaporation (02) et une zone de condensation (05) à l'intérieur de ladite chambre hermétique (01);
- un compresseur (04) relié à un moteur, le compresseur étant apte à accroitre la pression de la vapeur produite dans la zone d'évaporation (02) et à l'acheminer vers la zone de condensation (05);
- la chambre hermétique (01) est sous vide partiel, la pression à l'intérieure de ladite chambre étant inférieure à la pression atmosphérique ;
ladite installation étant telle que le compresseur (04) et son moteur [MOT] se trouvent à l'intérieur de ladite chambre hermétique (01), ledit moteur comprenant un stator et un rotor, ledit stator et ledit rotor se trouvant dans leur intégralité à l'intérieur de la chambre hermétique (01).

Selon un mode de réalisation avantageux de l'invention, le compresseur (04) est un compresseur apte à atteindre une vitesse de rotation supérieure à 7500rpm ou 15000rpm, préférablement apte à atteindre une vitesse de rotation supérieure à 25000rpm.

Selon un autre mode de réalisation avantageux, le compresseur (04) est de type à flux axial et que le moteur du compresseur est localisé dans le flux de vapeur, écoulant des zones d'évaporation (02) aux zones de condensation (05).

Selon un autre mode de réalisation préféré, le compresseur (04) comprend des pales qui sont aptes à atteindre une vitesse périphérique supérieure à 100 m/s, plus préférablement supérieure à 150 m/s, encore plus préférablement supérieure à 200 m/s.

Selon un autre mode de réalisation préféré, la pression à l'intérieur de la chambre hermétique (01) est inférieure à 0.75bar(a), préférablement est inférieure à 0.25bar(a).

Selon un autre mode de réalisation avantageux, ladite installation de l'invention comprend un compresseur à flux axial et une tuyère (13), de préférence une tuyère de type Venturi, ladite tuyère (13) comprenant une première partie et une seconde partie, l'aire de la section de la seconde partie étant supérieure à l'aire de la section de la première partie, le compresseur (04) étant placé à l'intérieur de ladite première partie et ladite seconde partie étant raccordée aux zones de condensation (05) de l'évaporateur-condenseur (11) ou ladite seconde partie comprenant le collecteur (29) ou étant raccordée au collecteur (29) de l'évaporateur-condenseur (11) pour l'admission de la vapeur dans la zone de condensation. Préférablement, ladite tuyère (13) comprend un matériau conducteur de chaleur. Plus préférablement, le matériau conducteur de chaleur de ladite tuyère (13) est le même matériau que celui utilisé pour la fabrication de l'évaporateur-condenseur.

Selon un autre mode de réalisation préféré, ladite installation de l'invention comprend au moins un module de distillation intégré (14), ledit module de distillation intégré (14) comprenant un évaporateur-condenseur, un compresseur (04) et une tuyère, de préférence une tuyère de type venturi (13), ladite tuyère (13) comprenant une première partie et une seconde partie, l'aire de la section de la seconde partie étant supérieure à l'aire de la section de la première partie, le compresseur (04) étant placé à l'intérieur de ladite première partie et ladite seconde partie étant raccordée à la zone de condensation (05) de l'évaporateur-condenseur (11) ou ladite seconde partie comprenant le collecteur (29) ou étant raccordée au collecteur (29) de l'évaporateur-condenseur (11) pour l'admission de la vapeur dans la zone de condensation.

Selon un autre mode de réalisation préféré, ladite installation de l'invention comprend une pompe d'alimentation en eau brute (15), une pompe d'extraction du distillat (16), une pompe d'extraction du concentrat (17), une pompe à vide d'extraction des gaz non condensables (19), au moins une desdites pompes et son moteur se trouvant complètement à l'intérieur de l'enceinte hermétique.

Préférablement, ladite installation de l'invention comprend une pompe de recirculation du concentrat (18) pour acheminer le concentrat dans la zone d'évaporation de l'évaporateur-condenseur. Avantageusement, ladite pompe de recirculation du concentrat et son moteur se trouve complètement à l'intérieur de la chambre hermétique (01).

Avantageusement, l'ensemble desdites pompes d'extraction du distillat et du concentrat, et de recirculation (16, 17, 18) et leurs moteurs se trouve complètement à l'intérieur de la chambre hermétique (01).

Préférablement, ladite installation de l'invention comprend
- des organes de régulation (23, 27) pour contrôler les débits d'alimentation en eau brute, d'extraction du distillat et d'extraction du concentrat ; et/ou
- des échangeurs thermiques entre le flux entrant d'eau brute et les flux sortants du distillat, du concentrat et des gaz non condensables.

Selon un autre mode de réalisation préféré, l'évaporateur-condenseur de ladite installation de l'invention comprend un collecteur (29) pour l'admission de la vapeur dans la zone de condensation, ledit collecteur (29) présentant une section totale (29) et une section d'admission composée de la somme des sections d'entrée des zones de condensation (05), le ratio entre la section d'admission dans les zones de condensation (05) et la section totale (29) du collecteur étant supérieur à 70% ou 80%, préférablement ce ratio est supérieur à 90% ou 95%.

Selon un autre mode de réalisation avantageux de l'invention, le compresseur (04), le collecteur (29) et/ou optionnellement la tuyère (de préférence une tuyère de type venturi) (13), et l'évaporateur-condenseur (11) sont alignés, le collecteur (29) et la tuyère étant apte à acheminer la vapeur à l'intérieur de la zone de condensation (05) de l'évaporateur-condenseur selon un axe rectiligne.

Selon un autre mode de réalisation préféré, l'aire de la section de la zone de condensation (05) de ladite installation de distillation de l'invention décroît dans le sens de circulation de la vapeur.

Selon un autre mode de réalisation préféré, ladite installation de l'invention comprend un système d'apport de calories pour maintenir la température à l'intérieur de la chambre hermétique à une température constante. Préférablement, ledit système d'apport de calorie comprend une résistance électrique ou une pompe à chaleur.

Selon un dernier mode de réalisation particulièrement préféré, l'invention fournit un module de distillation intégré (14) pour installation de distillation thermique caractérisé en ce qu'il comprend un évaporateur-condenseur, un compresseur (04) relié à un moteur et une tuyère (13), ladite tuyère (13) comprenant une première partie et une seconde partie, l'aire de la section de la seconde partie étant supérieure à l'aire de la section de la première partie, le compresseur (04) étant placé à l'intérieur de ladite première partie et ladite seconde partie étant raccordée à la zone de condensation (05) de l'évaporateur-condenseur.

Un deuxième objet de l'invention fournit une installation de distillation thermique par compression mécanique de vapeur comprenant (i) une chambre hermétique (01) comprenant une entrée pour recevoir de l'eau brute, une sortie pour évacuer le distillat, une sortie pour évacuer le concentrat et une sortie pour évacuer les gaz non condensables; (ii) un évaporateur-condenseur (11) comprenant une zone d'évaporation (02) et une zone de condensation (05) à l'intérieur de ladite chambre hermétique (01) et (iii) un compresseur (04) relié à un moteur; l'aire de la section de ladite zone de condensation (05) décroisant, préférablement décroisant continument et linéairement, dans le sens du flux de la vapeur. Préférablement, la chambre hermétique (01) est sous vide partiel, la pression à l'intérieure de ladite chambre étant inférieure à la pression atmosphérique.

La réduction des pertes de charges du système de transport de vapeur peut également être réalisée par un dimensionnement inhabituellement large de conduits de vapeur (06) et/ou de la configuration hydraulique (p. ex. le compresseur).

Un dernier objet de l'invention fournit une installation de distillation thermique par compression mécanique de vapeur comprenant (i) une chambre hermétique (01) comprenant une entrée pour recevoir de l'eau brute, une sortie pour évacuer le distillat, une sortie pour évacuer le concentrat et une sortie pour évacuer les gaz non condensables; (ii) un évaporateur-condenseur (11) comprenant une zone d'évaporation (02) et une zone de condensation (05) à l'intérieur de ladite chambre hermétique (01); (iii) un compresseur (04) relié à un moteur, le compresseur étant apte à accroitre la pression de la vapeur produite dans la zone d'évaporation (02) et à l'acheminer vers la zone de condensation (05); ledit compresseur (04) étant de type à flux axiale avec déflecteurs ou baffles, préférablement ayant un diamètre ou des dimensions supérieurs à 50cm, de préférence supérieurs à 100cm ou même supérieurs à 200cm. Préférablement, ledit moteur se trouve à l'intérieur ou à l'extérieur de ladite chambre hermétique. Préférablement, la chambre hermétique (01) est sous vide partiel, la pression à l'intérieure de ladite chambre étant inférieure à la pression atmosphérique.

### Brève description des figures

Ces aspects ainsi que d'autres aspects de l'invention seront clarifiés dans la description détaillée de modes de réalisation particuliers de l'invention, référence étant faite aux dessins des figures, dans lesquelles :
Figure 1 représente le schéma type des installations de dessalement de l'état de l'art selon le procédé MVC.
Figure 2 représente un mode de réalisation d'une installation de distillation selon la présente invention dans lequel l'entièreté du moteur [MOT] du compresseur (04) est situé à l'intérieur de l'enveloppe globale sous vide partiel.

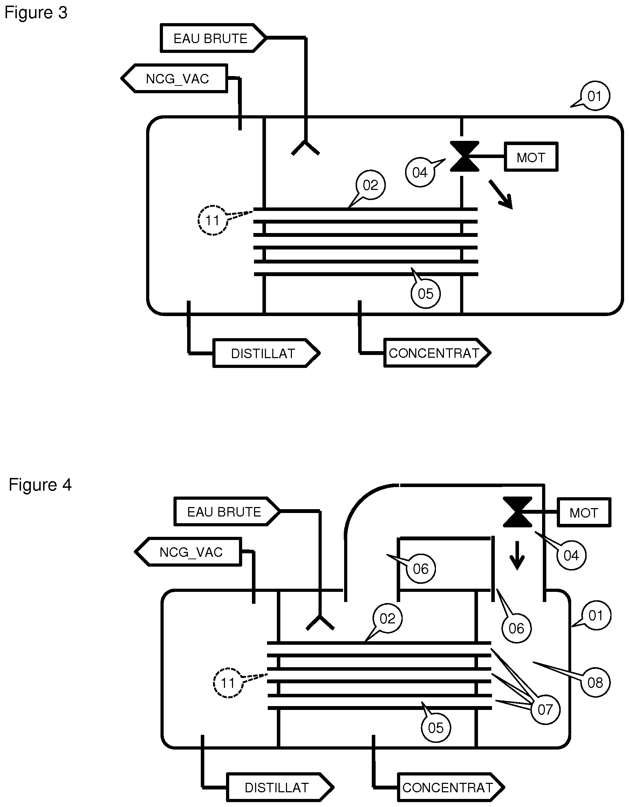

Figure 3 représente un mode de réalisation d'une installation de distillation selon la présente invention dans lequel l'entièreté du moteur [MOT] du compresseur (04) est immergé à l'intérieur de la chambre hermétique (01), en même temps supprimant tout conduit de transport de vapeur. Le compresseur peut être intégré à la structure supportant l'évaporateur-condenseur.
Figure 4 représente le schéma type des installations de dessalement surdimensionnée selon le procédé MVC comprenant des conduits de vapeur (06) à large dimension.

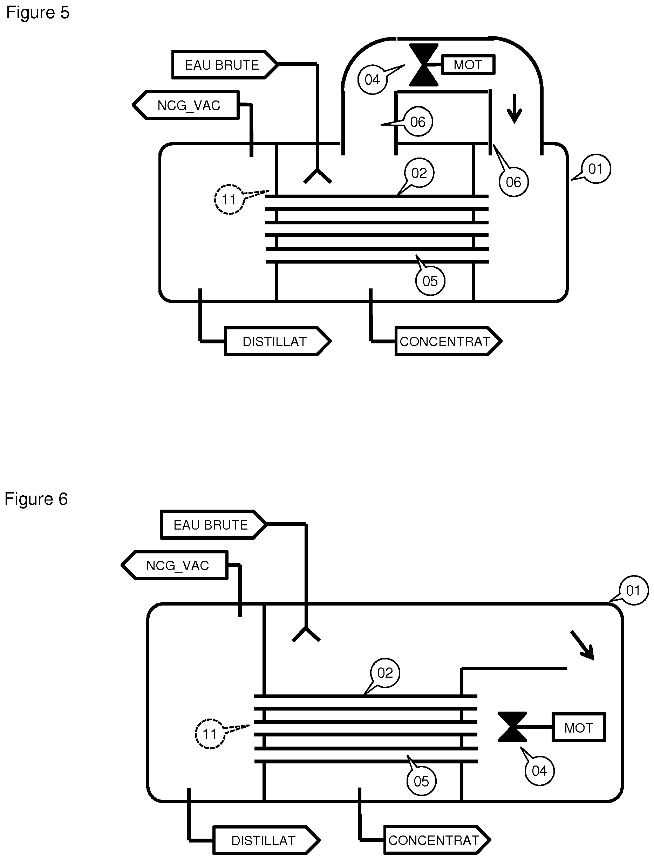

Figure 5 représente un mode de réalisation d'une installation de distillation surdimensionnée dans lequel l'entièreté du moteur [MOT] du compresseur (04) est installé au sein de l'enveloppe sous vide partiel (à l'intérieur de la chambre hermétique (01)) et dans lequel les conduits et le compresseur ont un dimensionnement inhabituellement large.
Figure 6 représente un mode de réalisation d'une installation de distillation selon la présente invention dans lequel l'entièreté du moteur [MOT] du compresseur (04) est immergé à l'intérieur de la chambre hermétique (01), en installant le compresseur (04) et son moteur [MOT] de manière attenante à l'évaporateur-condenseur (11) à l'entrée des zones de condensation (05).

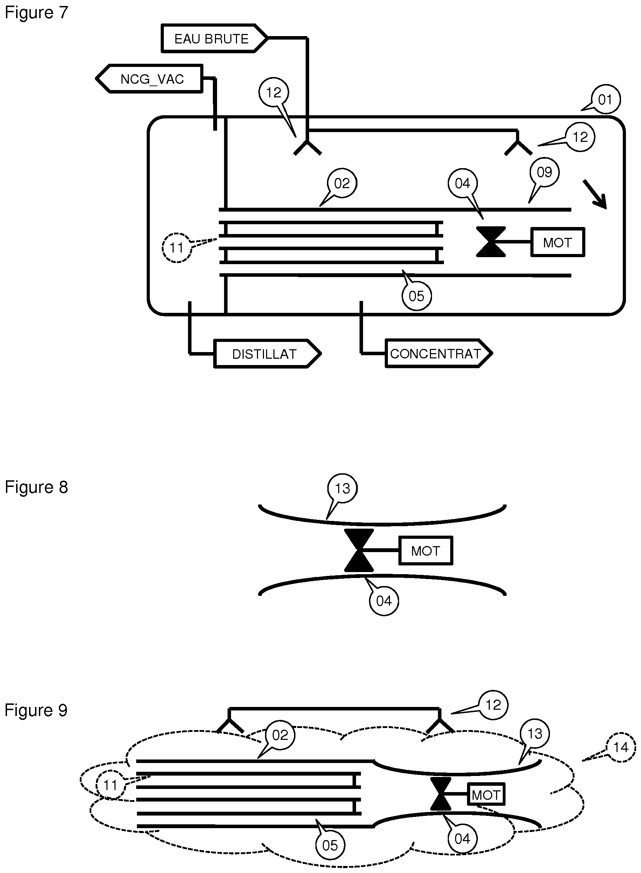

Figure 7 représente un mode de réalisation d'une installation de distillation selon la présente invention dans lequel l'entièreté du moteur [MOT] du compresseur (04) est immergé à l'intérieur de la chambre hermétique (01), en installant le compresseur (04) et son moteur [MOT] dans une chambre de compresseur (09) de manière attenante à l'évaporateur-condenseur (11) à l'entrée des zones de condensation (05).
Figure 8 montre une chambre de compresseur sous forme de tuyère de type venturi.
Figure 9 représente un module de distillation intégré, comprenant un évaporateur-condenseur (11) et un compresseur (4) et son moteur ; le compresseur se situant dans une chambre de compresseur sous forme de tuyère de type venturi (13).

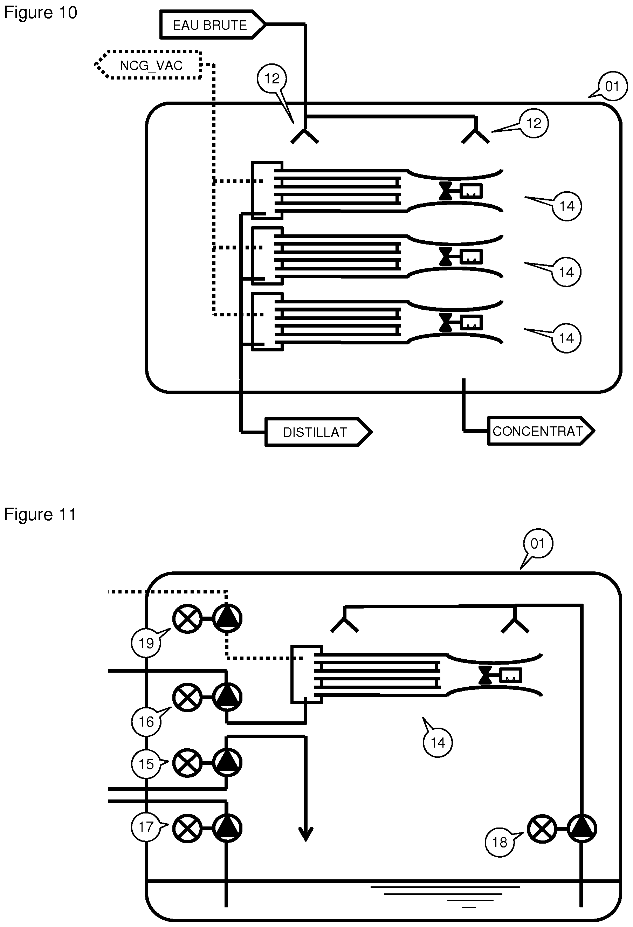

Figure 10 représente un mode de réalisation d'une installation de distillation selon la présente invention comprenant multiples modules de distillation intégrés.
Figure 11 représente un mode de réalisation d'une installation de distillation selon la présente invention dans lequel les équipements auxiliaires sont intégrés à l'intérieur de l'enveloppe globale sous vide partiel, à savoir la pompe de recirculation et son moteur (18), la pompe d'alimentation en eau brute et son moteur (15), la pompe d'extraction du distillat et son moteur (16), la pompe d'extraction du concentrat et son moteur (17), et la pompe d'extraction des gaz non condensables et mise sous vide et son moteur (19).

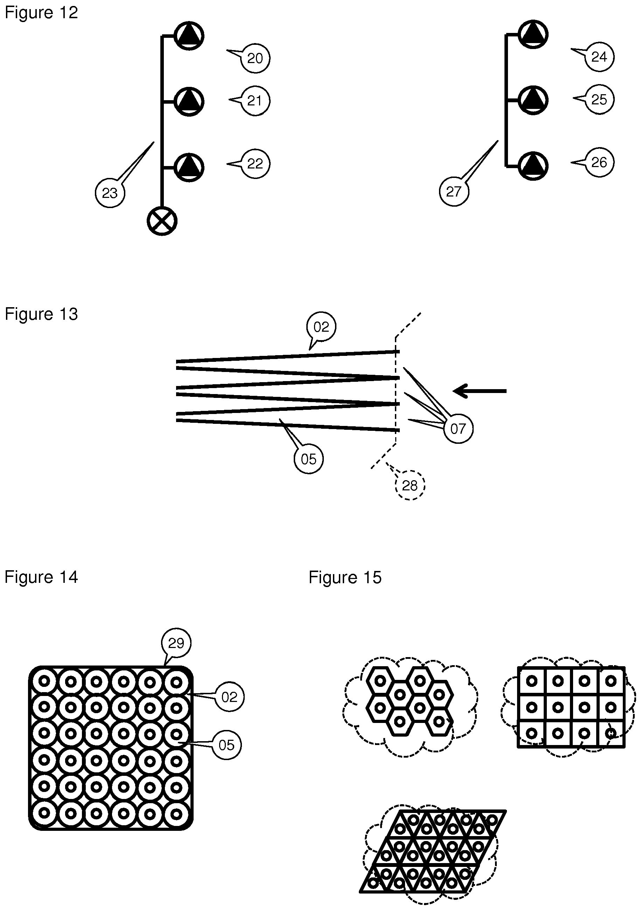

Figure 12 représente deux moyens de réguler les débits entrants et sortants selon les rapports fixes. A gauche, les trois pompes d'alimentation et d'extraction des distillat et concentrat (20,21,22) sont de type volumétrique et couplées sur un mécanisme commun animé par un seul moteur ; de cette manière les débits entrants et sortants sont en permanence selon une même proportion quelle que soit la vitesse de rotation du moteur commun, ladite proportion définissant le taux de conversion de l'unité de distillation. A droite, lesdites trois pompes d'alimentation et d'extraction des distillat et concentrat (24,25,26) sont de type quelconque et asservies chacune à un organe de variation de vitesse, ledit organe étant contrôlé de manière à fixer les débits entrant et sortants selon le taux de conversion voulu de l'unité de distillation.
Figure 13 représente des zones de condensation d'un évaporateur-condenseur telles que la section des zones de condensation diminue avec le trajet de la vapeur.
Figure 14 montre un mode de réalisation de l'évaporateur-condenseur mettant en oeuvre des tubes coniques dont les bouts de grand diamètres sont placés simplement côte à côte, offrant un ratio entre la section d'admission dans les zones de condensation (05) et la section totale (29) du collecteur supérieur à 70%.
Figure 15 montre des modes de réalisation alternatifs de l'évaporateur-condenseur comprenant de tubes de section initiale hexagonale, triangulaire ou carrée, offrant des ratios entre la section d'admission dans les zones de condensation (05) et la section totale (29) du collecteur supérieurs à 95%.

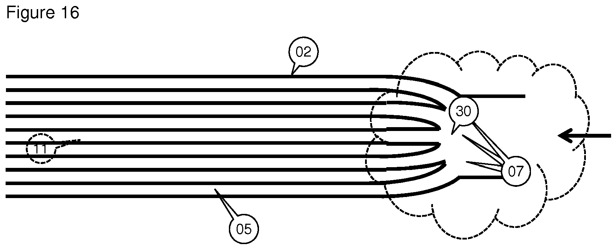

Figure 16 montre un mode de réalisation alternatif du collecteur (30) de l'évaporateur-condenseur et de l'évaporateur-condenseur mettant en oeuvre un collecteur muni de départs jointifs et coudés/profilés générant très peu de pertes de charge, permettant d'alimenter un évaporateur-condenseur conçu au moyen de simples tubes cylindriques.

### Liste des références présentes dans les figures :

(1) une chambre hermétique ; (2) une zone d'évaporation (de l'évaporateur-condenseur); (3) un système de transport ou un conduit de vapeur ; (4) un compresseur (relié à un moteur [MOT]) ; (5) une zone de condensation (de l'évaporateur-condenseur) ; (6) un conduit à dimension large; (7) l'entrée en zones de condensation ; (8) une chambre d'alimentation de l'évaporateur-condenseur ; (9) une chambre de compresseur; (11) un évaporateur-condenseur ; (12) un arroseur ; (13) une tuyère de type venturi ou une chambre de compresseur sous forme de tuyère de type venturi ; (14) un module de distillation intégré ; (15) une pompe d'alimentation en eau brute ; (16) une pompe d'extraction du distillat ; (17) une pompe d'extraction du concentrat ; (18) une pompe de recirculation du concentrat ; (19) une pompe à vide d'extraction des gaz non condensables ; (20) (21) (22) pompes d'alimentation en eau brute et d'extraction des concentrat et distillat sans leurs moteurs; (23) un moyen d'entrainement et un moteur commun aux trois pompes d'alimentation et d'extractions déterminant un rapport fixe entre lesdites pompes ; (24) (25) (26) pompes d'alimentation en eau brute et d'extraction des concentrat et distillat (27) un organe de régulation (p.ex. pour contrôler le débit des flux entrant ou sortants) ; (28) la coupe-section de l'entrée en zone de condensation de l'évaporateur-condenseur (29) un collecteur pour l'admission de la vapeur dans la zone de condensation ; (30) un collecteur profilé pour l'admission de la vapeur dans la zone de condensation permettant de concevoir l'évaporateur-condenseur au moyen de simples tubes cylindriques.

Les figures ne sont pas dessinées à l'échelle. Généralement, des éléments semblables sont dénotés par des références semblables dans les figures.

### Description de l'invention

La présente invention concerne les installations fonctionnant selon le principe de distillation thermique par compression mécanique de vapeur. L'invention porte principalement sur l'amélioration substantielle de l'efficacité du compresseur et sur l'élimination quasi totale des pertes de charges du système de transport de vapeur.

Dans au moins un de ses modes de réalisation (p.ex. Figure 7), l'invention est mise en oeuvre en utilisant un compresseur (04) tournant à des vitesses de rotation suffisamment élevées pour être compatible avec la très faible densité et la grande élasticité de la vapeur détendue à (par exemple) moins de 0.1 à 0.5bar(a) et maintenir de ce fait un rendement de compression intéressant.

Cette mise en oeuvre est rendue possible sur des unités de toutes tailles grâce à l'idée inventive de l'inventeur d'immerger l'entièreté du moteur [MOT] (comme p.ex. indiqué en [Figure 7]) du compresseur à l'intérieur de la chambre hermétique, voire même directement dans le flux de vapeur. De préférence, ledit moteur est un moteur électrique compatible avec une atmosphère à 100% d'humidité relative, p.ex. un moteur électrique du marché en version tropicalisée et/ou muni d'un orifice permettant à la condensation éventuelle de sortir du stator, et/ou dont les raccordements électriques sont réalisés par soudure étanchéifiées au moyen de gaine thermorétractable à résine ou par le prolongement des conducteurs du stator jusqu'à un boitier déporté, et/ou dont les roulements sont remplacés par des paliers à eau. Le compresseur et son moteur, surtout dans le cas d'un compresseur et son moteur à taille réduite, peuvent de cette manière tourner à des vitesses de rotation de l'ordre de plusieurs milliers ou dizaines voire centaines de milliers de tours/minute (rpm) grâce à l'absence de garniture d'étanchéité au vide sur l'arbre moteur-compresseur.

Cette mise en oeuvre est d'autant plus avantageuse que la taille des moteurs électriques diminue, à puissance égale, avec leur vitesse nominale de rotation, et ce de manière substantielle lorsque l'on atteint des vitesses élevées. La problématique de l'encombrement du moteur dans une configuration de turbine à haut rendement de type à flux axial avec déflecteurs (en Anglais VANEAXIAL FAN) devient donc beaucoup moins contraignante.

Il est, grâce à cette invention, maintenant possible de positionner un compresseur à n'importe quel endroit idéal du chemin de la vapeur ou du flux de la vapeur depuis les zones d'évaporation aux zones de condensation tout en diminuant la complexité et longueur de ce circuit au maximum.

Il est également maintenant possible d'utiliser des turbines raisonnablement petites (i.e. de préférence avec des dimensions inférieures à 30cm ou 50cm), tournant à très grande vitesse, pourvues de pales de fine épaisseur, faciles à équilibrer et peu coûteuses à réaliser par des procédés de moulage/injection.

Il est important de noter que un des domaines de l'invention concerne la réalisation d'usines d'eau potable par dessalement d'eau de mer, principalement les usines de taille importantes et majeures d'une capacité de production journalière de 10 à 1000MLD (MLD, Millions de Litres par Jour de l'Anglais Million Liters per Day), voire davantage.

Dans ce domaine, les investissements sont importants et reposent obligatoirement sur les bonnes références des usines existantes. De cette manière, il est d'usage que les usines selon les nouveaux procédés soient d'abord réalisées selon de petites tailles, puis augmentent de taille au fil des bonnes références et des années. Il est dans la pratique impossible de financer une grande usine ou une unité majeure de dessalement par MVC sans que des usines ou unités de petite taille aient démontré leur capacité à produire et leurs bonnes références, ce qui prend des années de manière progressive.

Un des objets de l'invention consiste à introduire, de manière générale dans ce contexte, le compresseur de type à flux axial (avec déflecteurs, en Anglais Vane Axial Fan ou Blower ou Compressor) dans le domaine du dessalement par MVC, ce qui passe obligatoirement par la mise en oeuvre de petites unités impliquant des turbines de taille réduite tournant à haute vitesse. Cette démarche est rendue possible grâce à l'idée inventive d'introduire le moteur du compresseur (MOT) à l'intérieur de la chambre hermétique (01).Le principe général d'un premier objet de l'invention repose sur le positionnement du compresseur (04) et son moteur [MOT] dans une installation de distillation thermique par MVC. Donc, un premier objet de la présente invention fournit une installation de distillation thermique par MVC comprenant, une chambre hermétique (01) sous vide partiel, un évaporateur-condenseur (11) comprenant une zone d'évaporation (02) et une zone de condensation (05) à l'intérieur de ladite chambre hermétique (01), et un compresseur relié à un moteur, le compresseur étant apte à accroitre la pression de la vapeur produite dans la zone d'évaporation et à l'acheminer vers la zone de condensation, dans laquelle ledit compresseur (04) et son moteur se trouvent à l'intérieur de la chambre hermétique (01), ledit moteur comprenant un stator et un rotor, ledit stator et ledit rotor se trouvant dans leur intégralité à l'intérieur de la chambre hermétique.

Cette disposition, représentée schématiquement dans par exemple Figures 2, 3, 6, 7, 10 et 11, procure plusieurs avantages :
- elle permet de réaliser un montage du moteur en couplage direct avec la turbine du compresseur,
- elle permet de ne plus nécessiter l'usage d'une garniture ou d'un joint auparavant nécessaire à l'étanchéité au vide de l'installation,
- elle permet de pouvoir placer judicieusement le monobloc compresseur-moteur à peu près n'importe où sur le chemin de la vapeur entre les zones d'évaporation et les zones de condensation; cela permet de simplifier considérablement le circuit de transport de vapeur et de réduire les pertes de charge à une valeur quasi nulle (par exemple, en Figures 6, 7, 10, 11),
- elle permet d'opérer une directe récupération de l'énergie thermique dissipée par le moteur électrique du compresseur au sein de la chambre hermétique, p.ex. au moyen d'un simple circuit de refroidissement sur la recirculation d'eau ou sur l'alimentation en eau brute opérant sans contrainte de pression différentielle (ici, la pression différentielle existant entre l'intérieur de la chambre hermétique (01) et la pression atmosphérique à l'extérieur de l'unité,
- elle simplifie l'enveloppe externe de la chambre hermétique et rend plus aisée son isolation thermique.

Cette disposition est rendue faisable sur le plan technique en utilisant simplement un vernis isolant sur l'ensemble des bobinages du rotor et du stator. Il est également possible de couler les bobinages dans des blocs usinés de résine assurant la protection demandés dans cette atmosphère de vapeur saturée.

Selon un mode de réalisation préférentiel, le compresseur est un compresseur dont la vitesse de rotation est supérieure à 7500 rpm, de préférence supérieure à 12000rpm ou même supérieure à 15000 rpm, 20000rpm ou 25000rpm. Cette caractéristique est rendue possible grâce à la caractéristique précédente puisqu'il n'est plus besoin de garniture ou de joint d'étanchéité sur l'arbre moteur-compresseur.

Préférablement, le compresseur et son moteur sont un compresseur et un moteur de taille réduite. Par les termes «compresseur/moteur de taille réduite », on entend un compresseur ayant un diamètre ou des dimensions inférieur(es) à 50cm, 30cm, ou même moins de 20cm ou 15cm, le moteur étant d'un diamètre inférieur à la turbine du compresseur, à savoir respectivement inférieur à 40cm, 20cm, 15cm ou 10cm. Ledit compresseur de taille réduite est apte à atteindre ou à opérer à des vitesses de rotation supérieure à 10000rpm, 15000rpm, ou même 25000rpm, ou exprimé alternativement, est apte à atteindre ou à opérer à des vitesses de rotation entre 10000rpm et 200000rpm, de préférence entre 25000 et 200000rpm. Ces grandes vitesses de rotation de ce compresseur de taille réduite permettent d'obtenir des grandes vitesses périphériques supérieures à 50 m/s, préférablement supérieures à 75 m/s, plus préférablement supérieures à 100 m/s, comme par exemple ≤150 m/s ou ≤200m/s. La vitesse périphérique est définie comme la vitesse linéaire de l'extrémité des pales, c'est-à-dire la vitesse de rotation multipliée à la longueur du rayon du compresseur ou des pales du compresseur. En plus, cette grande vitesse périphérique permet d'obtenir un haut rendement de compression (i.e. un rendement de >75%, ou même >80% ou >85%) dans les conditions de sous vide partiel (dans laquelle la vapeur a une très faible densité et grande élasticité).

Egalement, la taille avantageusement réduite des moteurs à très haute vitesse (à titre d'exemple jusqu'à moins de 0.04m de diamètre pour un moteur de 4kW) dont le diamètre peut être similaire à celui du moyeu du compresseur (p.ex. une turbine axiale), permet de ne pas ou peu générer d'obstruction supplémentaire au passage de la vapeur. En plus, le cas d'un compresseur et son moteur à taille réduite permet de réduire les coûts de fabrication.

L'homme de métier sait calculer les vitesses de rotation afin de générer le débit de vapeur nécessaire (variable selon la température du bain de l'installation).

Cette disposition permet de maintenir des performances des compresseurs à haut rendement dans une ambiance de vapeur fortement détendue. En effet, la vapeur détendue à 0.1 à 0.5bar(a), de préférence à 0.1 à 0.2bar(a), présente une densité proportionnellement inférieure à celle de l'air et une élasticité accrue. Si l'on veut mettre en oeuvre un compresseur à haut rendement tel un compresseur à flux axial avec déflecteurs et obtenir un rendement de l'ordre de 85% (sur la partie compression simple de fluide), cet état très faiblement dense et hautement élastique du fluide à compresser rend nécessaire, entre autres, que la cadence de renouvellement des battements des pales du compresseur dans un espace défini soit accrue. Cet accroissement de renouvellement des battements de pales s'obtient à la fois en mettant en oeuvre un nombre accru de pales, et une vitesse de rotation accrue.

En l'absence de cette faculté de haute vitesse de rotation, qui sont particulièrement valables dans le cas des compresseurs et moteurs de taille réduite, seuls les compresseurs à effet centrifuges restent utilisables en considérant des grandes vitesses périphériques de plus de 50m/s (donc des compresseurs centrifuges de grand taille, ayant un diamètre supérieur à 50cm ou 1 m) puisque par construction, le flux de vapeur entrant dans le compresseur n'a d'autre option que de sortir des pales de la turbine sous l'effet de la force centrifuge; néanmoins, non seulement ces compresseurs présentent un rendement inférieur (sur la partie compression simple de fluide) mais en plus, ils s'intègrent mal dans le chemin de la vapeur s'il est souhaité, comme c'est le cas dans le domaine de la distillation par MVC, de réduire au maximum les pertes de charges hydrauliques relatives au transport de la vapeur.

Le procédé peut fonctionner avec une légère baisse de performance au moyen d'autres types de turbines, pour autant qu'elles soient opérées à haute vitesse de rotation. Une simple turbine rotative à flux radial, par exemple, permet d'atteindre des rendements jusqu'à environ 75% (sur la partie compression simple). D'autres types de turbines telles les roues centrifuges à pales profilées ou inclinées (en Anglais Backward Curved or Backward Inclined Fan or Blower or Compressor) présentent des performances intéressantes mais sont moins adaptées à la configuration en ligne de la forme de réalisation préférée de l'invention.

Selon un mode de réalisation préféré de l'invention, le compresseur est de type à flux axial avec déflecteurs ou baffles, et le moteur du compresseur est localisé directement dans le flux de vapeur, ledit flux de vapeur écoulant des zones d'évaporation (02) aux zones de condensation (05). Etant donné que la taille et le diamètre des moteurs électriques décroissent à puissance nominale égale selon la vitesse de rotation nominale, l'avantage de considérer des moteurs à haute vitesse rend possible de loger le moteur dans un volume cylindrique attenant à la turbine, et d'un diamètre équivalent ou inférieur à son moyeu. Cela permet de concevoir aisément pour des turbines de petite taille un carter central de déflexion profilé intégrant le moteur qui ne perturbe pas le flux de vapeur traversant la turbine et ses parties amont et avales.

Préférablement, la pression à l'intérieur de la chambre hermétique (01) est inférieure à 0.75bar(a), de préférence inférieure à 0.5bar(a) ou même inférieure à 0.25bar(a). La distillation de l'eau minéralisée, en particulier de l'eau de mer, peut en principe s'opérer à toutes les pressions, pour autant que la température du procédé corresponde à la température d'ébullition du fluide à la pression donnée. A l'exception de l'écart ébullioscopique généré par la salinité de l'eau de mer, la relation entre la température d'ébullition et la pression est régie par le diagramme de Mollier.

Néanmoins, selon les gammes de températures choisies, différentes contraintes apparaissent; une contrainte majeure dans le cadre du dessalement de l'eau de mer est la gestion des précipités et de l'entartage des équipements internes, surtout de l'échangeur. Etant donné le seuil critique de température de 60 à 65°C en deçà duquel la formation des précipités, principalement les carbonates, est très réduite, les procédés et les installations selon les différents modes de réalisation de la présente invention fonctionnent préférablement à des températures et pressions respectivement inférieures à 70°C et 0.31 bar(a), plus préférablement inférieures à 60°C et 0.2bar(a). Par ailleurs, c'est à ces gammes de basses pressions que le type de compresseur inventé présentera ses meilleures performances.

Selon un mode préféré de l'invention, le compresseur, de préférence un compresseur à flux axial, est logé dans une tuyère, de préférence une tuyère de type venturi (13) (Figure 8), ladite tuyère comprenant une première partie et une seconde partie, l'aire de la section de la seconde partie étant supérieure à l'aire de la section de la première partie, le compresseur (04) étant placé à l'intérieur de ladite première partie et ladite seconde partie étant raccordée aux zones de condensation de l'évaporateur-condenseur ou au collecteur ou ladite seconde partie même faisant partie du collecteur. Préférablement le diamètre de ladite tuyère change (augmente) de manière progressive avec le trajet de la vapeur, selon une géométrie semblable à une tuyère de Venturi permettant un écoulement laminaire de la vapeur, jusqu'à atteindre un diamètre hydrauliquement compatible avec le collecteur (29) ou avec la section d'entrée des zones de condensation de l'évaporateur-condenseur. Dans le cas du compresseur à flux axial, la tuyère de type venturi, présentant un diamètre inférieur dans une partie de ladite tuyère (p.ex. en son centre), procure plusieurs avantages :
- le fluide à compresser subit un accroissement de vitesse qui est nécessaire à l'alimentation de la turbine, ce afin d'en augmenter le rendement,
- grâce à l'augmentation de vitesse du fluide à l'emplacement de la turbine, il y a une diminution de pression selon le théorème de Bernouilli (effet Venturi) qui participe à la diminution voire à la suppression des formations de précipités sur les pales de la turbine, précipités causés par la condensation engendrée sur les pales aux endroits de haute pression (il est à rappeler que la vapeur est saturée à l'entrée de la tuyère). L'usage d'une telle tuyère (de type Bernouilli / Venturi) permet d'accélérer le fluide en diminuant sa pression, sans perte d'énergie entre l'entrée de la tuyère et sa sortie, aux pertes de charges près. Lesdites pertes de charge peuvent être très réduites en effectuant un design propre à chaque configuration de débits et pressions, et en utilisant des déflecteurs à l'entrée qui évitent la formation de tourbillons.

Selon un autre mode de réalisation préféré, la chambre de compresseur (09), en particulier sous forme de tuyère, de préférence sous forme de tuyère de type venturi (13) est composée en un matériau conducteur de chaleur, qui est de préférence le même matériau que celui utilisé pour la fabrication de l'évaporateur-condenseur. Cette faculté permet de contribuer au refroidissement de la partie de la tuyère directement à proximité de la turbine, qui subit une augmentation de température liée aux hautes turbulences présentes en cet endroit. Cette faculté permet donc de contribuer, si légèrement soit-il, à une étape de compression qui présente le moins d'augmentation de température possible, sachant que toute augmentation de température se traduit par une surchauffe de la vapeur qui inhibe le phénomène recherché de condensation.

Conformément à un autre mode de réalisation, la présente invention fournit une installation de distillation thermique par compression mécanique de vapeur comprenant au moins un module de distillation intégré (IDM, de l'Anglais Integrated Distillation Module) [Figure 9] ledit module de distillation intégré (14) comprenant un évaporateur-condenseur (11), un compresseur (04) et une chambre de compresseur (09), de préférence sous forme de tuyère de type Bernouilli / Venturi (comme décrit ci-avant) (13). Ce mode de réalisation de l'invention peut être mise en oeuvre en installant soit un seul soit plusieurs IDM dans l'enceinte hermétique [Figure 10]. En installant plusieurs IDM dans une même enveloppe hermétique, tous les services auxiliaires [Eau Brute, NCG_VAC, Distillat, Concentrât] peuvent être communs et il en résulte, selon le cas, une économie d'échelle. Cette manière modulaire de concevoir une DWP permet de construire des usines de très grande capacité tout en mettant en oeuvre de nombreux IDM de petites tailles construits en série (p.ex. fabriqués par moulage et injection) de manière moins couteuse. A titre d'exemple, le coût de fabrication marginal de 25 ensembles turbine moulée/injectée et tuyère emboutie d'une capacité de chacun 1m³/h selon le procédé décrit dans ce document ne devra pas dépasser quelques centièmes du coût de revient de la partie mécanique d'un compresseur actuel inclus dans une unité MVC d'une capacité de 25m³/h telle qu'elle serait vendue aujourd'hui.

Selon un autre mode de réalisation préféré [Figure 11], ladite installation de distillation thermique par compression mécanique de vapeur comprend une pompe d'alimentation en eau brute (15), une pompe d'extraction du distillat (16), une pompe d'extraction du concentrat (17), une pompe à vide d'extraction des gaz non condensables (19), dans laquelle au moins une desdites pompes et son moteur se trouvant complètement à l'intérieur de l'enceinte hermétique. Selon un mode préféré de ce mode de réalisation, les pompes d'extraction du distillat et d'extraction du concentrat et de recirculation, ainsi que leur moteur, se trouvent complètement à l'intérieur de l'enceinte hermétique. Cette disposition présente plusieurs avantages importants :
- elle permet de simplifier la construction desdites pompes car, de la même manière que ce qui est exposé plus haut pour le compresseur, lesdites pompes une fois immergées dans l'enceinte hermétique ne requièrent plus d'étanchéité ou joint résistant au vide sur l'arbre moteur-pompe ;
- elle permet de simplifier la forme et la mise en oeuvre de l'isolation thermique de l'enceinte hermétique dès lors qu'il n'est plus nécessaire de poursuivre l'isolation thermique des tuyauteries d'alimentation et extraction jusqu'au-delà des pompes qui sont typiquement installées à l'extérieur du bloc principal de l'enceinte hermétique ;
- elle permet d'effectuer une récupération directe de l'énergie thermique dissipée par les pompes et leur moteur au profit du maintien de la température du bain d'eau à évaporer.

Selon un autre mode de réalisation préféré, ladite installation de distillation thermique par compression mécanique de vapeur comprend une pompe de recirculation du concentrât [Figure 11] (18) pour acheminer/recirculer le concentrat dans la zone d'évaporation de l'évaporateur-condenseur. Cette disposition qui est bien connue afin d'augmenter le taux de conversion des installations de distillation est rendue facile à mettre en oeuvre dans des enceintes sous vide partiel grâce à l'idée de placer l'ensemble de la pompe de recirculation (c'est-à-dire complète avec son moteur) à l'intérieur de l'enceinte hermétique. De la même manière que pour le compresseur et les autres pompes installées dans l'enceinte hermétique, cette disposition présente les mêmes avantages:
- elle permet de simplifier la construction desdites pompes car, de la même manière que ce qui est exposé plus haut pour le compresseur, lesdites pompes une fois immergées dans l'enceinte hermétique ne requièrent plus d'étanchéité ou joint résistant au vide sur l'arbre moteur-pompe ; de plus toute la partie aval sous-vide des pompes d'extraction et de recirculation générant divers problèmes connus de cavitation est très réduite ;
- elle permet de simplifier la forme et la mise en oeuvre de l'isolation thermique de l'enceinte hermétique dès lors qu'il n'est plus nécessaire de poursuivre l'isolation thermique des tuyauteries d'alimentation et extraction jusqu'au-delà des pompes qui sont typiquement installées à l'extérieur du bloc principal de l'enceinte hermétique ;
- elle permet d'effectuer une récupération directe de l'énergie thermique dissipée par les pompes et leur moteur au profit du maintien de la température du bain d'eau à évaporer.

La recirculation du concentrat permet de désolidariser le système d'arrosage (12) du système d'alimentation en eau brute, avec comme avantages de permettre un arrosage d'un débit différent ou plus élevé que celui qui est normalement imposé par le taux de conversion de l'effet, de pouvoir augmenter de taux de conversion de l'effet jusqu'à des valeurs de 50% voire supérieures.

Préférablement, ladite installation de distillation thermique par compression mécanique de vapeur comprend des échangeurs thermiques entre le flux entrant d'eau brute et les flux sortants du distillat, du concentrat et des gaz non condensables ainsi que des organes de régulation (23, 27) pour contrôler les débits d'alimentation en eau brute, d'extraction du distillat et d'extraction du concentrat. La température du procédé étant définie, de manière préférable inférieure à 70°C ou 60°C, plus préférable entre 40 et 60°C, il convient de s'assurer que l'énergie calorifique contenue dans l'enceinte hermétique ne soit pas continument évacuée à l'extérieur et ainsi perdue au fur et à mesure du renouvellement du bain à distiller par l'eau brute et les extractions de distillat, concentrat, et autres gaz non condensés. Chaque perte calorifique doit être compensée par un apport énergétique supplémentaire, soit un moyen chauffant, soit un excès de fonctionnement du compresseur. Afin d'éviter ces pertes calorifiques, il convient d'installer un échangeur à multi-flux qui dans un sens réchauffe l'eau brute entrante et dans l'autre, récupère l'énergie calorifique des flux sortants.

Afin d'assurer un fonctionnement optimal de cet échangeur multi-flux de chaleur, il est impératif que les quantités de chaleur échangées par unité de temps soient équivalentes, sinon des différences de température apparaissent aux sorties de l'échangeur vis-à-vis de la température du milieu receveur. Etant donné que les températures du procédé sont constantes et que les températures extérieures sont d'une faible variabilité, il convient que les débits des fluides échangés soient stables. Dans ce contexte, un mode de réalisation très simple comprend le placement des débitmètres sur chacune des lignes entrantes et sortantes, et d'asservir les vitesses des pompes respectives d'alimentation et d'extractions à une consigne de débit fixe.

Une des trois régulations de débit devra cependant être adaptable au contrôle de niveau soit du bain d'eau à distiller soit du réservoir de distillat selon que le compresseur opère à vitesse fixe ou régulée, afin de compenser à terme les écarts de production qui résulteront des diverses imprécisions des débits et températures des fluides concernés.

Une autre forme de réalisation de cette caractéristique est de considérer une pompe d'extraction du distillat asservie au niveau de distillat à extraire, et ensuite d'asservir au débit d'extraction du distillat les pompes d'alimentation en eau brute et d'extraction du concentrat selon un rapport fixe déterminant le taux de conversion. Ce faisant les débits des flux entrant et sortants sont en permanence équilibrés et les échanges de chaleur entre ces flux sont optimisés. Une forme de mise en oeuvre de cette caractéristique indiquée pour des petites unités est de considérer l'usage de pompes volumétriques couplées entre elles selon un rapport fixe [Figure 12, à gauche] déterminant le taux de conversion de l'unité, l'ensemble étant asservi au niveau d'extraction du distillat. Une option préférentielle est alors d'utiliser la pression absolue rencontrée sur le port d'entrée de la pompe d'alimentation en eau brute comme énergie mécanique afin de mouvoir l'ensemble des trois pompes (20,21,22) au travers du mécanisme d'entraînement commun (23). Pour de plus grandes unités, une forme de réalisation est de considérer des pompes centrifuges munies chacune d'un débitmètre et asservies à des variateurs de fréquences selon une régulation qui impose ledit rapport fixe déterminant le taux de conversion de l'unité.

Selon un autre mode de réalisation préféré, ledit évaporateur-condenseur de ladite installation de distillation thermique par compression mécanique de vapeur comprend un collecteur (29) pour l'admission de la vapeur dans la zone de condensation, ledit collecteur (29) présentant une section totale (29) et une section d'admission composée de la somme des sections d'entrée des zones de condensation (5), le ratio entre la section totale d'admission dans les zones de condensation (05) et la section totale (28) du collecteur (29) étant supérieur à 70% ou 80%, et selon un mode préféré de réalisation supérieur à 90 ou 95%, réduisant considérablement les pertes de charge de la vapeur entrant dans les zones de condensation.. En effet, dans une mise en oeuvre du procédé MVC telle que décrite dans ce document, où un des objectifs principaux est de réduire la consommation en énergie (électrique) de l'installation, y compris la forte réduction des pertes de charges, il faut bien garder à l'esprit que chaque perte de charge hydraulique générée sur la vapeur est convertie en énergie thermique, à savoir confère au fluide et/ou à l'obstacle qui génère ladite perte de charge hydraulique une augmentation de température. Cette augmentation de température, comme déjà mentionné plus haut, appliquée à la vapeur à une pression donnée, transformera la vapeur en vapeur surchauffée. Etant donné que la vapeur surchauffée condense mal, ce phénomène va sur le plan énergétique à l'encontre du procédé MVC ; il présente en effet une double pénalité :
- il requiert davantage de pression afin de compenser les pertes de charge, ce qui est regrettable au vu des performances limitées des compresseurs de vapeur, à plus forte raison dans le domaine de la vapeur dépressée,
- il requiert en outre une augmentation de la pression de travail ou de condensation afin d'amorcer le phénomène de condensation.

Pour cette raison, il est un objectif principal de supprimer le plus possible les pertes de charge sur tout le chemin de la vapeur. Une manière préférentielle de mettre en oeuvre ce principe est de concevoir un échangeur de telle manière que son ouverture sur la vapeur soit maximale, ou, exprimé alternativement, que la section d'admission de la vapeur dans les zones de condensation soit au moins 70% ou 80%, de préférence au moins 90 ou 95% de la section totale du collecteur (29)(28). Cela peut se concrétiser de diverses manières, dont les quelques formes de réalisation préférées suivantes :
- un assemblage de tubes ronds (Figure 14), de préférence à section décroissante [Figure 13] dont les parties accueillant la vapeur sont jointives afin de procurer un taux d'ouverture (07) important tout en travaillant avec des tubes de section cylindrique ;
- un assemblage de tubes emboitables (section hexagonale, carrée ou triangulaire) (Figure 15), de préférence à section décroissante [Figure 13] dont les parties accueillant la vapeur sont jointives afin de procurer un taux d'ouverture maximal (07); cette exécution est toutefois plus coûteuse à cause de la forme plus complexe des tubes ;
- un assemblage de tubes ronds conventionnels à section constante [Figure 16] précédé d'un collecteur profilé (30) qui répartit la section de sortie de la tuyère (13) du compresseur en un certain nombre de départs profilés à ouvertures jointives et affinées débouchant sur des courbes douces générant peu de pertes de charges ;
- un assemblage de plaques en accordéon présentant une ouverture quasi-totale et une section similaire à la Figure 13.

Selon un autre mode de réalisation préféré, ledit compresseur (04), ledit collecteur (29) et, optionnellement, ladite chambre de compresseur (9) ou ladite tuyère (13) et ledit évaporateur-condenseur de ladite installation de distillation thermique par compression mécanique de vapeur sont alignés, ledit collecteur (29) et ladite chambre de compresseur ou tuyère (13) étant apte à acheminer la vapeur à l'intérieur de la zone de condensation (05) de l'évaporateur-condenseur selon un axe rectiligne. Cette disposition, telle que la disposition précédente relative au taux d'ouverture de l'échangeur, est importante dans le but de diminuer les pertes de charges qui présentent un double effet pénalisant (tel que déjà expliqué et justifié ci-avant).

Selon un autre mode de réalisation préféré, ladite installation de distillation thermique par compression mécanique de vapeur comprend en outre un système d'apport de calories pour maintenir la température à l'intérieur de la chambre hermétique à une température constante, selon une forme de réalisation préférée au moyen d'une résistance électrique soit au moyen d'une pompe à chaleur. Il faut en effet éviter que la compensation des pertes calorifiques au travers de l'isolation thermique de l'enceinte et/ou à travers l'échangeur multi-flux s'effectue par le biez d'une augmentation de puissance du compresseur ; le rendement du compresseur est en effet moins élevé qu'une simple résistance chauffante, et très inférieur au rendement d'une pompe à chaleur, a fortiori travaillant avec un si faible delta de température. Le maintien de la température du bain est important; une température trop basse réduira la capacité de transfert d'énergie au travers du matériau de l'échangeur, une température trop élevée génèrera un excès de vapeur qui ne pourra pas participer à l'échange d'énergie au travers de l'échangeur et qui sera évacuée par la mise au vide (ou l'extraction des NCG_VAC). Dans les deux cas il y a une perte de rendement du distillateur, le pire cas étant une température trop basse.

Des formes de réalisation préférées sont :
- pour de petites unités, une simple résistance électrique placée dans le bain ou dans le circuit de recirculation du concentrat, ou au niveau de l'arrivées d'eau brute,
- dans le cas d'une installation comprenant un grand nombre d'IDM, un circuit auxiliaire et commun de fluide caloporteur chauffé par une pompe à chaleur centralisée ; un système de pompe à chaleur affiche un rendement relatif pouvant aller jusqu'à 600% de celui de la simple résistance électrique, à savoir jusqu'à environ 750% du système de compression de vapeur.

La Figure 13 représente aussi bien (un évaporateur-condenseur ayant) une section d'échangeur à plaques qu'une section d'échangeur à tubes de section décroissante.

Concernant la section décroissante des zones de condensation selon le chemin de la vapeur dans la zone de condensation, l'avantage de ce mode de réalisation de l'évaporateur-condenseur est triple:
- elle permet l'arrosage par les arroseurs (12) de la face/zone de l'échangeur responsable de l'évaporation (02), ce qui ne serait plus possible si les tubes étaient jointifs sur toute leur longueur ;
- elle favorise le contact de la vapeur à condenser dans les parties avancées du trajet de la vapeur ; en effet, au fur et à mesure que la vapeur avance et condense dans un échangeur, la quantité de vapeur restante diminue et, si la section du tube ou du volume de condensation reste constante, la concentration de vapeur diminue au fur et à mesure de l'avancement dans l'échangeur, et de la même manière le rendement de condensation diminue ;
- réduire les surfaces d'échange et la quantité de matériau nécessaire à leur mise en oeuvre d'un facteur de l'ordre de 30 à 45% à efficacité égale.

En utilisant des échangeurs à section diminuant avec le chemin de la vapeur, non seulement on économise 30 à 45% de matériau de construction de l'échangeur, mais en plus on en augmente le rendement à conditions égales. Ces avantages sont indépendantes des caractéristiques et le positionnement du compresseur et sont aussi valables dans les installations de distillation de l'état de l'art.

Donc, un deuxième objet de la présente invention fournit une installation de distillation thermique par compression mécanique de vapeur comprenant une chambre hermétique (01) de préférence sous vide partiel comprenant une entrée pour recevoir de l'eau brute, une sortie pour évacuer le distillat, une sortie pour évacuer le concentrat et une sortie pour évacuer les gaz non condensables ; un évaporateur-condenseur (11) comprenant une zone d'évaporation (02) et une zone de condensation (05) à l'intérieur de ladite chambre hermétique (01) et un compresseur (04) relié à un moteur; ledit évaporateur-condenseur ayant une section décroissante de la zone de condensation selon le trajet de la vapeur dans la zone de condensation.

Un dernier objet de la présente invention fournit une installation de distillation thermique par compression mécanique de vapeur comprenant une chambre hermétique (01) de préférence sous vide partiel comprenant une entrée pour recevoir de l'eau brute, une sortie pour évacuer le distillat, une sortie pour évacuer le concentrat et une sortie pour évacuer les gaz non condensables ; un évaporateur-condenseur (11) comprenant une zone d'évaporation (02) et une zone de condensation (05) à l'intérieur de ladite chambre hermétique (01) et un compresseur (04) relié à un moteur ; ledit compresseur étant un compresseur de type à flux axial. Préférablement, ledit compresseur de type à flux axial comprend des déflecteurs ou baffles. Préférablement, ledit compresseur de type à flux axial a un diamètre ou des dimensions supérieur(es) à 30cm ou 50cm, plus préféré supérieur(es) à 75cm ou 1 m. Dans ce contexte, le moteur dudit compresseur peut-être situé à l'extérieur ou à l'intérieur de la chambre hermétique.

Les différents modes de réalisation des procédés et installation de la présente invention sont particulièrement utile dans le domaine du dessalement d'eau de mer ou de la déminéralisation d'eau, par exemple pour la production d'eau potable ou d'eau déminéralisée.

## Revendications

1. Installation de distillation thermique par compression mécanique de vapeur pour le dessalement d'eau comprenant :
- une chambre hermétique (01) comprenant une entrée pour recevoir de l'eau brute, une sortie pour évacuer le distillat, une sortie pour évacuer le concentrat et une sortie pour évacuer les gaz non condensables ;
- un évaporateur-condenseur (11) comprenant une zone d'évaporation (02) et une zone de condensation (05) à l'intérieur de ladite chambre hermétique (01) ;
- un compresseur (04) relié à un moteur, le compresseur étant apte à accroitre la pression de la vapeur produite dans la zone d'évaporation (02) et à l'acheminer vers la zone de condensation (05);
- la chambre hermétique (01) étant sous vide partiel, la pression à l'intérieure de ladite chambre étant inférieure à la pression atmosphérique ;
**caractérisée en ce que**
- le compresseur (04) et son moteur se trouvent à l'intérieur de ladite chambre hermétique, ledit moteur comprenant un stator et un rotor, ledit stator et ledit rotor se trouvant dans leur intégralité à l'intérieur de la chambre hermétique.

2. Installation selon la revendication 1, **caractérisée en ce que** le compresseur (04) est un compresseur apte à atteindre une vitesse de rotation supérieure à 7.500rpm.

3. Installation selon la revendication 2, **caractérisée en ce que** le compresseur (04) est un compresseur apte à atteindre une vitesse de rotation supérieure à 25000 rpm.

4. Installation selon l'une quelconque des revendications précédentes, **caractérisée en ce que** le compresseur (04) est de type à flux axial et que le moteur du compresseur ou l'ensemble du compresseur (04) et le moteur du compresseur est localisé directement dans le flux de vapeur, écoulant des zones d'évaporation (02) aux zones de condensation (05).

5. Installation selon l'une des revendications précédentes, **caractérisée en ce que** la pression à l'intérieur de la chambre hermétique (01) est inférieure à 0.75bar(a).

6. Installation selon la revendication 5, **caractérisée en ce que** la pression à l'intérieur de la chambre hermétique (01) est inférieure à 0.25bar(a).

7. Installation selon l'une des revendications précédentes, **caractérisée en ce que** le compresseur (04) comprend des pales qui sont aptes à atteindre une vitesse périphérique supérieure à 50m/s.

8. Installation selon l'une des revendications précédentes, **caractérisée en ce qu'**elle comprend une tuyère (13), ladite tuyère (13) comprenant une première partie et une seconde partie, l'aire de la section de la seconde partie étant supérieure à l'aire de la section de la première partie, le compresseur (04) étant placé à l'intérieur de ladite première partie et ladite seconde partie étant raccordée aux zones de condensation (05) de l'évaporateur-condenseur.

9. Installation selon la revendication 8, dont ledit compresseur est un compresseur à flux axial.

10. Installation selon la revendication 8 ou 9, **caractérisée en ce que** ladite tuyère (13) comprend un matériau conducteur de chaleur.

11. Installation selon l'une quelconque des revendications précédentes, **caractérisée en ce qu'**elle comprend au moins un module de distillation intégré (14), ledit module de distillation intégré (14) comprenant un évaporateur-condenseur, un compresseur (04) et une tuyère (13), ladite tuyère (13) comprenant une première partie et une seconde partie, l'aire de la section de la seconde partie étant supérieure à l'aire de la section de la première partie, le compresseur (04) étant placé à l'intérieur de ladite première partie et ladite seconde partie étant raccordée à la zone de condensation (05) de l'évaporateur-condenseur (11) ou ladite seconde partie comprenant le collecteur (29) ou étant raccordée au collecteur (29) de l'évaporateur-condenseur (11) pour l'admission de la vapeur dans la zone de condensation.

12. Installation selon l'une quelconque des revendications précédentes, **caractérisée en ce qu'**elle comprend une pompe d'alimentation en eau brute (15), une pompe d'extraction du distillat (16), une pompe d'extraction du concentrat (17), une pompe à vide d'extraction des gaz non condensables (19), au moins une desdites pompes et son moteur se trouvant complètement à l'intérieur de la chambre hermétique (01).

13. Installation selon la revendication 12, **caractérisée en ce qu'**elle comprend une pompe de recirculation du concentrat (18) pour acheminer le concentrat dans la zone d'évaporation (02) de l'évaporateur-condenseur, ladite pompe de recirculation et son moteur se trouvant complètement à l'intérieur de la chambre hermétique (01).

14. . Installation selon l'une des revendications 12 et 13, **caractérisée en ce que** l'ensemble desdites pompes d'extraction du distillat et du concentrat, et de recirculation (16, 17, 18) et leurs moteurs se trouve complètement à l'intérieur de la chambre hermétique (01).

15. Installation selon l'une quelconque des revendications précédentes **caractérisée en ce que** l'évaporateur-condenseur comprend un collecteur (29) pour l'admission de la vapeur dans la zone de condensation, ledit collecteur (29) présentant une section totale (29) et une section d'admission composée de la somme des sections d'entrée des zones de condensation (05), le ratio entre la section d'admission dans les zones de condensation (05) et la section totale (29) du collecteur étant supérieur à 70%.

## Patentansprüche

1. Anlage zur thermischen Destillation durch mechanische Dampfverdichtung für die Meerwasserentsalzung, umfassend:
- eine hermetische Kammer (01), die einen Eingang zum Aufnehmen des Rohwassers, einen Ausgang zum Ablassen des Destillats, einen Ausgang zum Ablassen des Konzentrats und einen Ausgang zum Ablassen der nicht kondensierbaren Gase umfasst;
- einen Verdampfer-Kondensator (11), der eine Verdampfungszone (02) und eine Kondensationszone (05) im Innern der hermetischen Kammer (01) umfasst;
- einen Verdichter (04), der mit einem Motor verbunden ist, wobei der Verdichter in der Lage ist, den Druck des Dampfes zu erhöhen, der in der Verdampfungszone (02) erzeugt wird, und ihn zu der Kondensationszone (05) zu bringen;
- wobei sich die hermetische Kammer (01) unter Teilvakuum befindet, wobei der Druck im Innern der Kammer geringer als der Atmosphärendruck ist;
**dadurch gekennzeichnet, dass**
- sich der Kompressor (04) und sein Motor im Innern der hermetischen Kammer befinden, wobei der Motor einen Stator und einen Rotor umfasst, wobei sich der Stator und der Rotor vollständig im Innern der hermetischen Kammer befinden.

2. Anlage nach Anspruch 1, **dadurch gekennzeichnet, dass** der Kompressor (04) ein Kompressor ist, der in der Lage ist, eine Drehzahl von mehr als 7500 rpm zu erreichen.

3. Anlage nach Anspruch 2, **dadurch gekennzeichnet, dass** der Kompressor (04) ein Kompressor ist, der in der Lage ist, eine Drehzahl von mehr als 25000 rpm zu erreichen.

4. Anlage nach einem der vorhergehenden Ansprüche, **dadurch gekennzeichnet, dass** der Kompressor (04) von der Art mit Axialströmung ist und dass der Motor des Kompressors oder die Gesamtheit des Kompressors (04) und des Kompressormotors direkt in der Dampfströmung befindlich ist, die von den Verdampfungszonen (02) zu den Kondensationszonen (05) strömt.

5. Anlage nach einem der vorhergehenden Ansprüche, **dadurch gekennzeichnet, dass** der Druck im Innern der hermetischen Kammer (01) geringer als 0,75 bar(a) ist.

6. Anlage nach Anspruch 5, **dadurch gekennzeichnet, dass** der Druck im Innern der hermetischen Kammer (01) geringer als 0,25 bar(a) ist.

7. Anlage nach einem der vorhergehenden Ansprüche, **dadurch gekennzeichnet, dass** der Kompressor (04) Schaufeln umfasst, die in der Lage sind, eine Umfangsgeschwindigkeit von mehr als 50 m/s zu erreichen.

8. Anlage nach einem der vorhergehenden Ansprüche, **dadurch gekennzeichnet, dass** sie eine Düse (13) umfasst, wobei die Düse (13) einen ersten Teil und einen zweiten Teil umfasst, wobei die Querschnittsfläche des zweiten Teils größer als die Querschnittsfläche des ersten Teils ist, wobei der Kompressor (04) im Innern des ersten Teils angeordnet ist und der zweite Teil an die Kondensationszonen (05) des Verdampfer-Kondensators angeschlossen ist.

9. Anlage nach Anspruch 8, deren Kompressor ein Axialströmungskompressor ist.

10. Anlage nach Anspruch 8 oder 9, **dadurch gekennzeichnet, dass** die Düse (13) ein wärmeleitendes Material umfasst.

11. Anlage nach einem der vorhergehenden Ansprüche, **dadurch gekennzeichnet, dass** sie mindestens ein integriertes Destillationsmodul (14) umfasst, wobei das integrierte Destillationsmodul (14) einen Verdampfer-Kondensator, einen Kompressor (04) und eine Düse (13) umfasst, wobei die Düse (13) einen ersten Teil und einen zweiten Teil umfasst, wobei die Querschnittsfläche des zweiten Teils größer als die Querschnittsfläche des ersten Teils ist, wobei der Kompressor (04) im Innern des ersten Teils angeordnet ist und der zweite Teil an die Kondensationszone (05) des Verdampfer-Kondensators (11) angeschlossen ist oder der zweite Teil den Verteiler (29) umfasst oder an den Verteiler (29) des Verdampfer-Kondensators (11) für das Einströmen des Dampfens in die Kondensationszone angeschlossen ist.

12. Anlage nach einem der vorhergehenden Ansprüche, **dadurch gekennzeichnet, dass** sie eine Rohwasserversorgungspumpe (15), eine Destillatförderpumpe (16), eine Konzentratförderpumpe (17), eine Vakuumpumpe (19) zum Fördern der nicht kondensierbaren Gase umfasst, wobei sich mindestens eine der Pumpen und ihr Motor vollständig im Innern der hermetischen Kammer (01) befinden.

13. Anlage nach Anspruch 12, **dadurch gekennzeichnet, dass** sie eine Konzentratumwälzpumpe (18) umfasst, um das Konzentrat in die Verdampfungszone (02) des Verdampfer-Kondensators zu bringen, wobei sich die Umwälzpumpe und ihr Motor vollständig innerhalb der hermetischen Kammer (01) befinden.

14. Anlage nach einem der Ansprüche 12 und 13, **dadurch gekennzeichnet, dass** sich alle Pumpen zum Fördern und Umwälzen des Destillats und des Konzentrats (16, 17, 18) und ihre Motoren vollständig im Innern der hermetischen Kammer (01) befinden.

15. Anlage nach einem der vorhergehenden Ansprüche, **dadurch gekennzeichnet, dass** der Verdampfer-Kondensator einen Verteiler (29) zum Einströmen des Dampfes in die Kondensationszone umfasst, wobei der Verteiler (29) einen Gesamtquerschnitt (29) und einen Einströmquerschnitt, der aus der Summe der Eingangsquerschnitte der Kondensationszonen (05) besteht, aufweist, wobei das Verhältnis zwischen dem Einströmquerschnitt in den Kondensationszonen (05) und dem Gesamtquerschnitt (29) des Verteilers größer als 70 % ist.

## Claims

1. Thermal distillation facility using mechanical vapour compression for the desalination of water, comprising:
- a hermetic chamber (01) comprising an inlet for receiving feed water, an outlet for discharging the distillate, an outlet for discharging the concentrate and an outlet for discharging the non-condensable gases;
- an evaporator/condenser (11) comprising an evaporation zone (02) and a condensation zone (05) inside said hermetic chamber (01);
- a compressor (04) connected to a motor, the compressor being able to increase the pressure of the vapour produced in the evaporation zone (02) and to convey it to the condensation zone (05);
- the hermetic chamber (01) being under partial vacuum, the pressure inside said chamber being less than atmospheric pressure;
**characterised in that**
- the compressor (04) and its motor are situated inside said hermetic chamber, said motor comprising a stator and a motor, said stator and said rotor being situated entirely inside the hermetic chamber.

2. Facility according to claim 1, **characterised in that** the compressor (04) is a compressor able to achieve a rotation speed above 7500 rev/min.

3. Facility according to claim 2, **characterised in that** the compressor (04) is a compressor able to achieve a rotation speed above 25,000 rev/min.

4. Facility according to any one of the preceding claims, **characterised in that** the compressor (04) is of the axial flow type and the motor of the compressor or the assembly consisting of the compressor (04) and the compressor motor is located in the vapour stream, flowing from the evaporation zones (02) to the condensation zones (05).

5. Facility according to one of the preceding claims, **characterised in that** the pressure inside the hermetic chamber (01) is less than 0.75 bar(a).

6. Facility according to claim 5, **characterised in that** the pressure inside the hermetic chamber (01) is less than 0.25 bar(a).

7. Facility according to one of the preceding claims, **characterised in that** the compressor (04) comprises blades that are able to achieve a peripheral speed above 50 m/s.

8. Facility according to one of the preceding claims, **characterised in that** it comprises a tube (13), said tube (13) comprising a first part and a second part, the area of the cross-section of the second part being greater than the area of the cross-section of the first part, the compressor (04) being placed inside said first part and said second part being connected to the condensation zones (05) of the evaporator/condenser.

9. Facility according to claim 8, said compressor of which is an axial-flow compressor.

10. Facility according to claim 8 or 9, **characterised in that** said tube (13) comprises a heat-conductive material.

11. Facility according to any one of the preceding claims, **characterised in that** it comprises at least one integrated distillation module (14), said integrated distillation module (14) comprising an evaporator/condenser, a compressor (04) and a tube (13), said tube (13) comprising a first part and a second part, the area of the cross-section of the second part being greater than the area of the cross-section of the first part, the compressor (04) being placed inside said first part and said second part being connected to the condensation zone (05) of the evaporator/condenser (11) or said second part comprising the header (29) or being connected to the header (29) of the evaporator/condenser (11) for the admission of the vapour into the condensation zone.

12. Facility according to any one of the preceding claims, **characterised in that** it comprises a feed-water supply pump (15), a distillation-extraction pump (16), a concentrate-extraction pump (17), and a vacuum pump for extracting the non-condensable gases (19), at least one of said pumps and its motor being situated completely inside the hermetic chamber (01).

13. Facility according to claim 13, **characterised in that** it comprises a concentrate-recirculation pump (18) for transporting the concentrate into the evaporation zone (02) of the evaporator/condenser, said recirculation pump and its motor being situated completely inside the hermetic chamber (01).

14. Facility according to one of claims 13 and 14, **characterised in that** said distillate and concentrate extraction pumps and recirculation pump (16, 17, 18) and their motors is situated completely inside the hermetic chamber (01).

15. Facility according to any one of the preceding claims, **characterised in that** the evaporator/condenser comprises a header (29) for admitting vapour into the condensation zone, said header (29) having a total cross-section (29) and an admission cross-section composed of the sum of the inlet cross-sections of the condensation zones (05), the ratio between the cross-section of admission into the condensation zones (05) and the total cross-section (29) of the header being greater than 70%.
